# FASCICULE DE BREVET EUROPEEN

(11) **EP 2 831 943 B1**
(45) Date de publication et mention de la délivrance du brevet: **19.04.2017**
(21) Numéro de dépôt: 13713833.5
(22) Date de dépôt: 26.03.2013
(51) Int. Cl.: H01M 8/0282, H01M 8/0286, H01M 8/124

(54) **POCEDE DE FABRICATION ET D' UTILISATION D' UN JOINT D'ETANCHEITE PRESERVANT L'INTEGRITE DE CELLULES ELECTROCHIMIQUES**
VERFAHREN ZUR HERSTELLUNG UND VERWENDUNG EINER DICHTUNG ZUM BEWAHREN DER INTEGRITÄT VON ELEKTROCHEMISCHEN ZELLEN
MANUFACTURE AND USE OF A SEAL PRESERVING THE INTEGRITY OF ELECTROCHEMICAL CELLS

(30) Priorité: 27.03.2012 FR 1252743
(43) Date de publication de la demande: 04.02.2015
(73) Titulaire: Commissariat à l'Énergie Atomique et aux Énergies Alternatives, 75015 Paris (FR); Technetics Group France SAS, 42000 Saint-Etienne (FR)
(72) Inventeur: BRUGUIERE, Lionel, F-34130 Saint-Aunes (FR); SASSOULAS, Hervé, F-38000 Grenoble (FR); REYTIER, Magali, F-38250 Villard De Lans (FR); PALERMO, François, F-84840 Lapalud (FR)
(74) Mandataire: Brevalex
(86) Numéro de dépôt international: PCT/EP2013/056447
(87) Numéro de publication internationale: WO 2013/144167

(56) Documents cités:
- US-A1- 2010 068 602

## Description

L'invention concerne un joint d'étanchéité dont une propriété essentielle est de préserver l'intégrité de cellules électrochimiques dans les EVHT ou SOFC (électrolyseurs de vapeur d'eau à haute température ou piles à combustible à oxydes solides) et porte plus précisément sur des procédés de fabrication et d'utilisation d'un tel joint et de fabrication d'assemblages où il est utilisé.

Les cellules électrochimiques des genres indiqués, utilisées pour la production ou la consommation d'hydrogène, sont généralement montées sous forme d'empilements multi-cellules (stacks) et sont d'une très grande fragilité. Elles sont composées de deux électrodes, normalement d'une en céramique du côté de l'oxygène et d'une autre mixte, en céramique et métallique, du côté de l'hydrogène, et d'un électrolyte mitoyen en céramique. Elles sont contraintes entre deux interconnecteurs métalliques dont le rôle est de garantir l'apport en gaz et en courant aux électrodes.

On cherche à fabriquer de tels empilements de cellules sans risquer de les endommager malgré leur fragilité et en préservant une étanchéité satisfaisante afin d'éviter les fuites de gaz. Un joint est disposé autour de chaque cellule pour accomplir cette dernière fonction. Mais le travail des cellules à haute température, entre 600° et 900°C, et l'environnement chimique formé d'atmosphères oxydantes ou réductrices compliquent les problèmes mentionnés en faisant apparaître des dilatations thermiques différentielles et donc des contraintes sur la cellule et le joint, et des risques de corrosion ou d'altération des matériaux.

L'art antérieur fait connaître différents types de joints mettant en oeuvre des matériaux différents qui offrent souvent de bonnes caractéristiques, mais qui ne satisfont toutefois pas parfaitement à toutes les exigences mentionnées ci-dessus.

C'est ainsi que des joints métalliques ont été proposés pour servir d'étanchéité à de telles cellules. Ils sont en constante évolution et les niveaux d'effort de serrage qu'on doit leur appliquer pour obtenir une bonne étanchéité ont fortement diminué. Ils présentent aussi l'avantage de faciliter le démontage. Leur rigidité reste toutefois importante pour les envisager favorablement dans cette technique. Un autre inconvénient est qu'ils sont conducteurs électriques et ne permettent donc pas à eux seuls de maintenir une séparation électrique entre les interconnecteurs.

D'autres joints comprennent des brasures à base de nickel ou d'argent. Ils ont encore les inconvénients d'être conducteurs de l'électricité et d'être coûteux, souvent complexes à mettre en oeuvre ; ils peuvent être incompatibles chimiquement avec les atmosphères environnantes; enfin, le démontage et le recyclage des constituants des empilements sont presque impossibles avec de tels joints.

Les joints à compression de type mica ont également été étudiés. Leurs propriétés d'isolation électrique, leurs capacités à absorber les différences de dilatation thermique en permettant le glissement de différents constituants sur eux et leurs facultés à se déformer pour compléter les petits défauts de planéité des portées de joints sont des atouts intéressants. Ils nécessitent toutefois de maintenir un effort de serrage important notamment pour éviter la diffusion de gaz au travers d'eux, et donc d'instaurer des contraintes dans la cellule, notamment pendant les phases de chauffage où des détériorations sont possibles à cause des dilatations thermiques différentielles.

Les vitrocéramiques sont isolantes électriques, accommodent aussi les différences de dilatation thermique des matériaux constituants, du moins pendant une première phase de montée en température à la fabrication du joint avant de se cristalliser. Le joint devient ensuite rigide. Il résiste alors bien aux différences de pression entre l'intérieur et l'extérieur de la cellule, mais il est crucial que le coefficient de dilatation thermique soit voisin de celui des matériaux des cellules et des interconnecteurs, faute de quoi il sera impossible de refroidir l'empilement sans endommager les joints.

Des verres (non dévitrifiants à haute température) ont enfin été proposés plus récemment : l'absence de cristallisation leur confère une certaine souplesse au-dessus de la température de transition vitreuse qui permet de mieux accommoder les dilatations thermiques différentielles. Ils sont tous isolants électriques. Des incertitudes d'étanchéité pèsent toutefois sur les dispositifs qui les composent, et diverses difficultés de fabrication du joint doivent être surmontées.

En effet, les joints en verre sont généralement élaborés sous forme de barbotines (mélanges pâteux de liants organiques et de verres), qui sont déposées directement dans les zones concernées des joints lors du montage de l'empilement. Ces barbotines n'offrent aucune résistance mécanique et se déforment donc dès qu'elles sont comprimées entre les interconnecteurs métalliques. La compression qu'il faut appliquer à l'empilement comprenant la cellule pendant la fabrication est donc transmise intégralement aux cellules dès le début du montage de l'empilement. Des contraintes de cisaillement sur la cellule apparaissent également à cause de la différence des dilatations thermiques entre elles et les interconnecteurs, puisque la fabrication du joint implique un chauffage dont le but est d'évaporer les liants organiques pour transformer la barbotine en un produit de verre solide. Il faut ajouter que l'évaporation des liants forme des bulles de gaz dans un premier temps du chauffage, de 50°C à 400°C, qui pourront donner ensuite des chemins de fuite à travers le joint en s'écoulant hors de lui, l'accroissement du chauffage diminuant la viscosité du verre. Il est enfin difficile de définir une quantité de verre optimale, par suite de la déformation non maîtrisée des barbotines pendant la fabrication de l'empilement sous l'action des phénomènes mentionnés (évaporation des liants, diminution de viscosité, rapprochement des interconnecteurs et dilatation thermiques des pièces environnantes), et leur pesée est à peu près impossible quand l'empilement est formé.

Les risques principaux qu'on rencontre à la fabrication sont donc une rupture de la cellule à cause des contraintes qui lui sont appliquées, et une dégradation de l'étanchéité diminuant le rendement de production de la cellule, et donc la rentabilité des procédés dans lesquels elle est mise en oeuvre, consécutive à des défauts de forme et de structure de joint.

L'art antérieur comprend les documents US-A-2009/0130458 et WO-A-2008/026802, ainsi que US-A-2010/068602 qui décrit un joint et un assemblage du genre de l'invention, où le joint est fabriqué selon un procédé différent.

Le premier de ces documents décrit un joint à matrice en verre renforcée de céramique en particules, sphères ou fibres, afin de renforcer l'étanchéité, l'isolation électrique, la cohésion des joints et d'éviter une compression excessive de l'empilement menant à un contact entre les interconnecteurs et un court-circuit. De même, le second décrit un joint en matrice en verre renforcée de fibres en céramique. De tels dispositifs n'empêchent pas une compression de longue durée de la cellule pendant la fabrication, ce qui crée des contraintes de cisaillement fortes sur la cellule dues aux différences de dilatation entre les matériaux métalliques des interconnecteurs et céramiques de la cellule. Une rupture de la cellule ne peut être exclue.

Un objet de l'invention est de proposer un joint d'étanchéité à base de verre et de céramique et un procédé de fabrication particulier de ce joint offrant à la fois une bonne étanchéité, probablement meilleure que dans les conceptions connues, une isolation électrique sûre, ainsi qu'une maîtrise excellente du procédé de fabrication d'un assemblage tel que mentionné ci-dessus et qui limite en particulier les contraintes mécaniques subies par la cellule pendant cette fabrication à cause de la compression et des dilatations thermiques différentielles.

Un autre objet de l'invention est de maîtriser la qualité du verre utilisé dans le joint, et notamment l'épaisseur des couches qu'ils forment entre les interconnecteurs et la régularité de sa structure interne consécutive à un bon dégazage des bulles d'air produites par l'évaporation des liants.

Un aspect général de l'invention est un procédé de fabrication d'un joint d'étanchéité à disposer entre deux portées, comprenant les étapes suivantes :
- préparation d'un noyau de céramique massif, continu et comprenant deux faces opposées ;
- dépôt de cordons de verre ou de vitrocéramique à un état pâteux sur lesdites faces du noyau ;
- chauffage du noyau et des cordons pour produire une évaporation de liants présents dans les cordons et solidifier lesdits cordons ;
- les cordons restant à un état physiquement libre pendant le dépôt et le chauffage.

Une caractéristique importante de ce procédé est que le joint est fabriqué jusqu'à un état solide en étant à un état physiquement libre, c'est-à-dire séparé de l'assemblage à cellule électrochimique dans lequel il trouvera généralement place, contrairement à ce qui est normalement fait dans cette technique, et que la solidification des cordons s'exerce sans contrainte. Cette fabrication « ex situ » offre plusieurs avantages : il est tout d'abord possible de bien doser la quantité de verre utilisée et d'éviter des déformations importantes et des déplacements de matière ; le dégazage est facilité par cet état libre ; et l'utilisation d'un noyau massif solide rend facile le dépôt des cordons de soudure et la manipulation du joint.

Dans une réalisation caractéristique, les cordons sont déposés sur le noyau avec une section bombée, s'étendent seulement sur des portions centrales de la largeur du noyau, et ils gardent une section bombée après avoir été solidifiés, quoique le fluage du verre produise normalement un aplatissement et un élargissement modérés de cette section.

Le joint ainsi obtenu peut être utilisé pour fabriquer un assemblage à cellule électrochimique logée entre des interconnecteurs. Le procédé d'utilisation du joint comprend alors les étapes suivantes :
- placement du joint entre les interconnecteurs à côté de la cellule ;
- chauffage de l'assemblage comprenant la cellule, le joint et les interconnecteurs au-dessus d'une température de transition vitreuse des cordons ;
- compression du joint entre les interconnecteurs pour rapprocher les interconnecteurs en faisant fluer le joint ;
- arrêt de la compression quand les interconnecteurs touchent tous deux la cellule.

La compression du joint produit d'abord exclusivement un fluage du verre ou de la vitrocéramique quand il a atteint sa température de transition vitreuse, sans comprimer la cellule, qui reste donc soulagée de contraintes. Lorsque les interconnecteurs touchent tous deux la cellule, le joint a été mis en forme convenablement et la charge de compression se répartit sur la cellule et le joint.

Dans une variante du procédé, le chauffage peut être appliqué avec un palier au-dessus d'une température de dévitrification des cordons quand ceux-ci sont en vitrocéramique, afin d'obtenir une germination de cristaux.

Avantageusement, les cordons gardent une section bombée après avoir été solidifiés, de hauteur suffisante pour ne permettre la compression de la cellule entre les interconnecteurs que tardivement dans la transitoire thermique.

L'invention concerne encore un procédé de fabrication d'un assemblage à cellule électrochimique pouvant notamment être obtenu par ce procédé et comprenant deux interconnecteurs, une cellule serrée entre les interconnecteurs et un joint s'étendant entre les interconnecteurs à côté de la cellule, selon les revendications 5 à 8.

De façon caractéristique, les couches de verre ou de vitrocéramique joignant le noyau aux interconnecteurs ont une épaisseur uniforme et parfaitement maîtrisée, ce qui est très difficile à garantir avec les procédés usuels. On évite aussi bien les défauts de continuité de ces couches de liaison que les épaisseurs excessives, qui pourraient compromettre l'étanchéité ou la résistance du joint. Il est à noter que le procédé de fabrication du joint qui est proposé ici se prête bien à des adaptations à des cellules d'épaisseur différentes, puisqu'il suffira de modifier en conséquence l'épaisseur du noyau et de déposer la même quantité de verre ou de vitrocéramique pour maintenir l'épaisseur optimale des couches de liaison.

Une partie de la matière visqueuse du joint a pu fluer autour du noyau. Elle complète cependant l'étanchéité en débordant autour du noyau et en élargissant le joint. Il est conforme à l'invention d'ajouter, dans certaines réalisations préférées, un limiteur d'écoulement disposé entre les interconnecteurs sans être serré entre eux, le joint étant situé entre la cellule et le limiteur d'écoulement, afin d'éviter la dissémination de cette matière.

Ces aspects de l'invention ainsi que d'autres seront maintenant décrits au moyen des figures suivantes :
- la figure 1 représente une réalisation d'un joint d'étanchéité conforme à l'invention à l'état fini ;
- la figure 2 illustre le joint dans sa première étape ;
- la figure 3 illustre le joint après la fabrication « ex situ » ;
- la figure 4 illustre les cycles thermiques ex-situ et in-situ de fabrication d'un joint, le temps en heures étant indiqué en abscisses et la température en degrés Celsius en ordonnées ;
- la figure 5 illustre l'état initial de l'assemblage quand le joint vient d'être installé, et
- la figure 6 illustre l'état final de l'assemblage ;
- la figure 7 illustre les tests d'étanchéité par partie (méthode de mesure : chute de pression), le temps en heures étant indiqué en abscisses, et la température en degrés Celsius ainsi que la pression en bars en ordonnées.

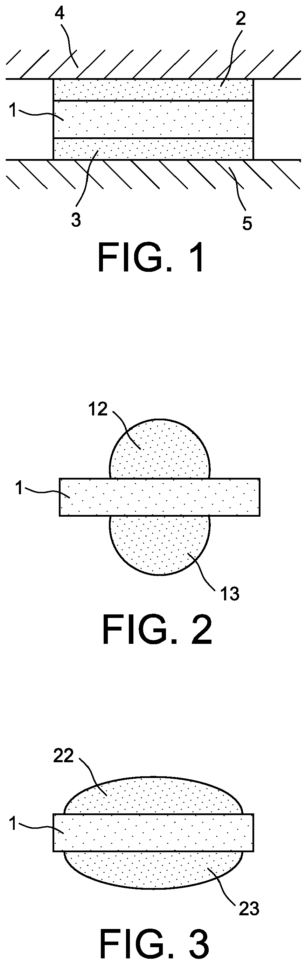

Le joint à l'état fini est représenté à la figure 1 et comprend un noyau 1 en céramique et deux couches de liaison 2 et 3 à des interconnecteurs 4 et 5 métalliques, les couches de liaison 2 et 3 étant en verre ou vitrocéramique et couvrant la face supérieure et la face inférieure du noyau 1. Le noyau 1 est représenté ici en section. Sa forme est continue, rectiligne ou circulaire à deux faces principales plates. Il apporte à la fois une bonne cohésion mécanique, une bonne résistance chimique aux atmosphères rencontrées dans la cellule, une bonne étanchéité aux fluides et une bonne isolation électrique. Les fonctions principales des couches de liaison 2 et 3 sont d'accommoder les dilatations thermiques différentielles des portées reliées par le joint, qui appartiennent à des interconnecteurs 4 et 5 dans le cas où le joint est employé dans des cellules électrochimiques, et du noyau 1, et de compléter l'étanchéité du joint grâce à la continuité qu'elles assurent entre le noyau 1 et les interconnecteurs 4 et 5 ; leur étanchéité propre est convenable, sans qu'elle doive être aussi bonne que celle du noyau 1 puisque leur épaisseur est réduite. Elle peut être estimée à 80 µm ou moins avec du verre, et 150 µm ou moins avec de la vitrocéramique, pour une largeur de joint d'environ 4 mm par exemple. En effet, des épaisseurs trop importantes pourraient conduire à des fluages de la matière vitreuse, qui s'écoulerait latéralement le long du joint pendant la fabrication ou en cours de fonctionnement, rompant ainsi l'étanchéité. L'épaisseur du noyau 1 est choisie en fonction de l'écartement voulu entre les interconnecteurs 4 et 5 et des épaisseurs choisies pour les couches de liaison 2 et 3.

La fabrication du joint s'effectue de la façon suivante d'après les figures 2 et 3. Le noyau 1 est d'abord fabriqué, puis des cordons de barbotine 12 et 13, devant constituer des couches de liaison 2 et 3, sont déposés sur des faces principales opposées du noyau 1, à savoir la face inférieure et la face supérieure, toutes deux plates. Un exemple de composition de barbotine est de la poudre de verre de diamètre de grains inférieure à 80 µm, d'éthanol, de terpinéol et de PVB (polyvinylbutadiène). Le dépôt peut se faire soit manuellement avec une seringue, soit grâce à un robot asservi. Les barbotines 12 et 13 ont une section approximative en demi-sphère, qui est maîtrisée et calibrée en poids et en dimensions pour garantir une forme du joint optimale. Elles n'offrent à ce stade aucune résistance mécanique. Elles sont déposées seulement sur une portion centrale de largeur des faces plates.

L'étape suivante consiste à faire subir un traitement thermique spécifique à ce joint brut pour obtenir un joint « objet », c'est-à-dire un joint solide indépendant de la cellule à assembler. Il a pour but d'évaporer les liants organiques présents dans les barbotines 12 et 13 de manière à en faire une matière solide et fixée au noyau 1, et il consiste en un maintien pendant quelques dizaines de minutes du joint brut à une température prédéfinie de l'ordre de (Tg +50°C), où Tg est la température de transition vitreuse du verre.

Le joint objet alors obtenu est représenté à la figure 3 et comprend, outre le noyau 1, deux cordons en dôme 22 et 23 remplaçant les barbotines 12 et 13 et qui ont une forme un peu différente à cause du fluage que celles-ci ont subi pendant leur solidification. Leur hauteur est supérieure à l'épaisseur que prendront les couches de liaison 2 et 3, et leur base s'étend sur la plus grande partie de la largeur des faces plates du noyau 1, mais pas sur sa totalité. Leur porosité est importante à cause du dégazage des liants organiques, ce qui imposera plus tard une phase de densification.

Les avantages de ce procédé sont que la fabrication séparée du joint objet de la figure 3 est facile, sans contrainte particulière et que la masse de verre (ou de vitrocéramique) utilisée est facile à maîtriser, de même que les dimensions, et notamment la forme et la hauteur des cordons en dôme 22 et 23.

Il est possible que la viscosité trop faible des cordons de barbotine 12 et 13 empêche de les déposer simultanément sur le noyau 1, celle 13 du dessous s'écoulant. On procède alors en déposant l'un des cordons 12 et 13 sur la face supérieure du noyau 1, en le soumettant au traitement thermique, puis en retournant le noyau 1 et en plaçant le second cordon de barbotine lui aussi sur la face supérieure, libre, du noyau 1 avant de recommencer le traitement thermique.

Si de la vitrocéramique est employée, la cristallisation partielle doit intervenir seulement ultérieurement, pendant le montage dans l'empilement, de sorte que le traitement thermique doit être mené à une température insuffisante pour produire cette cristallisation.

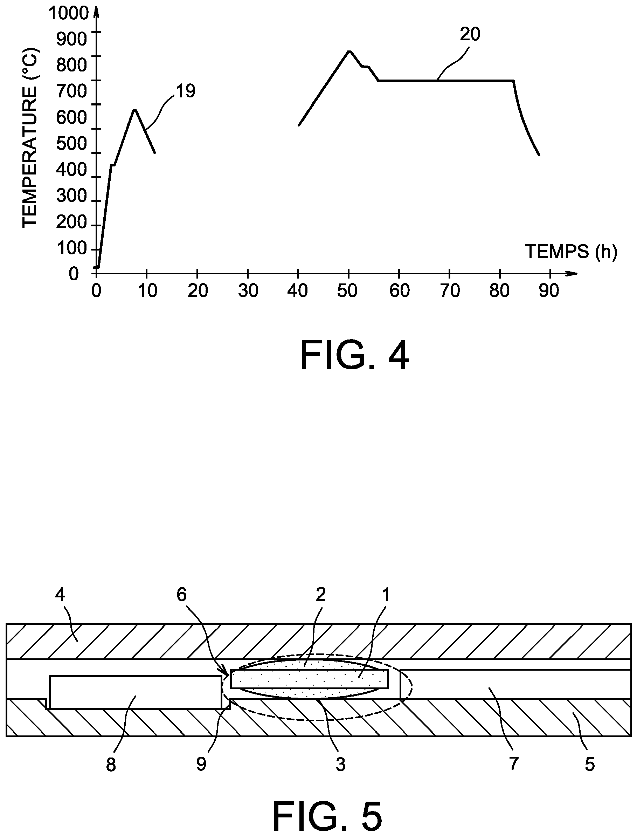

Des essais furent menés avec un joint formé d'un noyau en Macor^{®} (marque déposée) et de verre Schott G018-304. Le noyau 1 était une rondelle dont les diamètres étaient de 20 et 32 mm et l'épaisseur de 0,7 mm. Les cordons de barbotine 12 et 13 avaient une quantité de verre permettant d'obtenir finalement un joint régulier avec des couches de liaison 2 et 3 de 100 µm d'épaisseur sur la totalité de la surface de la rondelle. La barbotine fut traitée à 680°C avec un palier de 30 minutes (courbe 19 de la figure 4).

Le joint objet conforme à la figure 3 ayant été obtenu, il fut placé dans une maquette d'essai comprenant un plateau en Inconel X750 à fort coefficient de dilatation thermique (environ 15,6.10⁻⁶ K⁻¹) et une sole en YSZ (coefficient de dilatation thermique à environ 10,8.10⁻⁶ K⁻¹), le joint objet étant comprimé entre eux. Le plateau était mobile de façon à imposer une compression à la sole et au joint objet. Le cycle thermique fut le suivant :
- montée en température à 2°C/min jusqu'à 450°C,
- montée en température à 1°C/min jusqu'à 620°C,
- mise en place de la charge gravitaire,
- montée en température à 0,5°C/min jusqu'à 920°C,
- palier de 30 minutes à 920°C,
- descente en température à 0,5°C/min jusqu'à 860°C,
- palier de 1 heure et 30 minutes à 860°C,
- descente en température à 0,5°C/min jusqu'à 800°C,
- stabilisation du palier à 800°C pendant 2 heures,
- maintien à 800°C pour tests d'étanchéité,
- refroidissement libre sans déchargement pour du refroidissement jusqu'à la température ambiante.

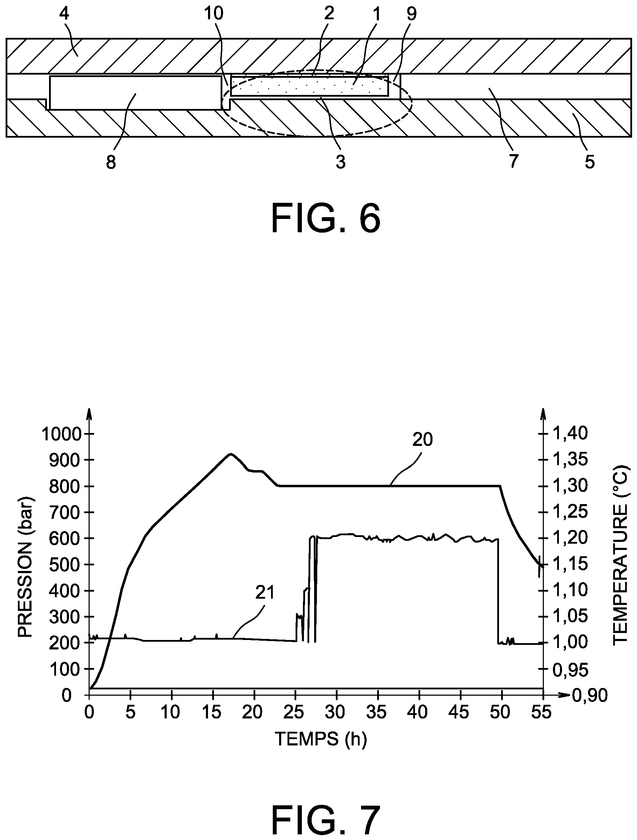

Le diagramme correspondant est représenté aux figures 4 et 7 (courbe 20).

Le chargement de compression du joint fut entrepris à la température de transition vitreuse du verre, augmentée de +50°C environ. A partir de cette température, la viscosité du verre pouvait diminuer et permettait d'accommoder lentement les différences de dilatations thermiques et facilitait la mise en place du joint jusqu'à la température de 920°C. Par ailleurs, cette température de mise en place de la charge ne devait pas être trop élevée dans le cas d'une vitrocéramique où la phase cristalline se développe et qui perd donc rapidement sa viscosité, avec la conséquence que l'étanchéité est impossible à établir si la charge est appliquée trop tard, alors que la cristallisation est trop importante.

Un joint analogue à celui de la figure 1 fut alors obtenu. Des essais d'étanchéité furent menés sur lui (d'après la courbe 21 de la figure 7), et ils comprenaient trois essais de courte durée avec une différence de pression de 50, 100 et 200 millibars pendant respectivement 3000, 1800 et 1800 secondes au travers du joint, puis un essai de plus longue durée avec une différence de pression de 200 millibars pendant 1 heure, figure 7. Des débits de fuite furent, respectivement de 1,2.10⁻⁴, 2.10⁻⁴ et 2,0.10⁻⁴ mbar.l/s pour les essais de courte durée, et 3,2.10⁻⁴ mbar.l/s pour l'essai de longue durée, soit une chute de pression de 6,6 mbar en hélium, ou un débit de fuite en air de 5,4.10⁻³ Nml/min. La température des essais était 800°C. L'étanchéité était considérée comme très bonne.

On passe maintenant à la description du joint tel qu'il est monté dans l'empilement. Il porte globalement la référence 6 à la figure 5, et une cellule 7 est disposé entre les interconnecteurs 4 et 5, et elle est entourée par le joint 6. Un limiteur d'écoulement 8 entoure le joint 6; il est retenu dans une rainure circulaire 9 de l'interconnecteur 5 inférieur et ne touche pas l'interconnecteur 4 supérieur.

Le joint 6 est à l'état du joint objet de la figure 3 au début de l'assemblage de l'empilement. L'empilement de cellules subit un échauffement progressif, et des différences de dilatations thermiques apparaissent dans l'empilement et se traduisent par des contraintes aux interfaces de matériaux. Les cordons en dôme 22 et 23 peuvent toutefois glisser sans inconvénient au contact des interconnecteurs 4 et 5, la matière demeurant principalement dans l'intervalle annulaire entre la cellule 7 et le limiteur d'écoulement 8.

Il faut souligner que comme la cellule 7 et le limiteur d'écoulement 8 ne sont pas en contact avec l'interconnecteur supérieur 4, ils ne subissent alors pas de contraintes et seul le joint 6 est comprimé.

Quand la température de transition vitreuse est dépassée, le verre se fluidifie peu à peu, commence à s'écouler, et un rapprochement des interconnecteurs 4 et 5 devient possible. On augmente la température jusqu'à un optimum appelé température de mise en forme où il est alors judicieux de mettre en place la charge du système pour faciliter l'écoulement du verre ou de la vitrocéramique avant cristallisation. Cette action a pour effet de chasser le surplus de matière présent sur et sous le noyau 1 de part et d'autre de celui-ci, vers la cellule 7 ou le limiteur d'écoulement 8. Cela s'accompagne d'une densification de la matière des couches de liaison 2 et 3 par expulsion des bulles d'air. La compression continue jusqu'à ce que l'interconnecteur supérieur 4 touche la cellule 7 et permette alors le passage de courant. La compression de la cellule 7 étant tardive en température, une rupture de la cellule 7 ou un autre dommage n'est pas à craindre. On obtient finalement l'agencement représenté à la figure 6, où un joint analogue à celui de la figure 1 s'étend autour de la cellule 7, avec encore du verre ou de la vitrocéramique présent dans les intervalles entre le joint 6 d'une part, la cellule 7 et le limiteur d'écoulement 8 d'autre part, ce qui renforce l'étanchéité en formant un enrobage 10 entourant complètement le noyau 1, y compris ses faces latérales. Les couches de liaison 2 et 3 ont l'épaisseur voulue. Le limiteur d'écoulement 8 ne subit toujours aucune compression. Il peut être en mica afin de ne pas rompre l'isolation électrique entre les interconnecteurs 4 et 5.

Dans le cas d'une vitrocéramique, un palier de température est nécessaire pour garantir une cristallisation suffisante ; il peut être mené à 860°C par exemple.

## Revendications

1. Procédé de fabrication d'un joint d'étanchéité à disposer entre deux portées, comprenant les étapes suivantes :
- préparation d'un noyau (1) de céramique massif, continu et comprenant deux faces opposées ;
- dépôt de cordons (12, 13) de verre ou de vitrocéramique à un état pâteux sur lesdites faces du noyau ;
- chauffage du noyau et des cordons pour produire une évaporation de liants présents dans les cordons et solidifier lesdits cordons ;
- les cordons restant à un état physiquement libre pendant le dépôt et le chauffage.

2. Procédé de fabrication d'un joint d'étanchéité suivant la revendication 1, **caractérisé en ce que** les cordons sont déposés avec une section bombée sur des portions centrales de largeur des faces du noyau et gardent une section bombée après avoir été solidifiés de hauteur suffisante pour ne permettre la compression de la cellule entre les interconnecteurs que tardivement dans le transitoire thermique.

3. Procédé d'utilisation d'un joint d'étanchéité obtenu par un procédé suivant la revendication 1 ou 2 pour fabriquer un assemblage à cellule (7) électrochimique logée entre des interconnecteurs (4, 5), comprenant les étapes suivantes :
- placement du joint (6) entre les interconnecteurs à côté de la cellule ;
- chauffage de l'assemblage comprenant la cellule, le joint et les interconnecteurs au-dessus d'une température de transition vitreuse des cordons ;
- compression du joint entre les interconnecteurs pour rapprocher les interconnecteurs en faisant fluer le joint.

4. Procédé suivant la revendication 3, **caractérisé en ce qu'**il comprend un palier de chauffage au-dessus d'une température de dévitrification des cordons, les cordons étant en vitrocéramique.

5. Procédé de fabrication d'un assemblage à cellule électrochimique, comprenant deux interconnecteurs (4, 5), une cellule (7) serrée entre les interconnecteurs et un joint (6) s'étendant entre les interconnecteurs à côté de la cellule, le joint étant composé d'un noyau céramique massif, continu et comprenant deux faces opposées parallèles à des faces en regard des interconnecteurs, **caractérisé en ce que** le joint est fabriqué selon l'une quelconque des revendications 3 ou 4 en comprimant les cordons pour en faire un enrobage de verre ou de vitrocéramique entourant le noyau et s'étendant notamment en deux couches (2, 3) entre lesdites faces du noyau et lesdites faces en regard des interconnecteurs.

6. Procédé suivant la revendication 5, **caractérisé en ce que** lesdites couches ont une épaisseur au plus égale à 80 µm, l'enrobage étant en verre.

7. Procédé suivant la revendication 5, **caractérisé en ce que** lesdites couches ont une épaisseur au plus égale à 150 µm, l'enrobage étant en vitrocéramique.

8. Procédé suivant l'une quelconque des revendications 5 à 7, **caractérisé en ce qu'**il comprend un limiteur d'écoulement (8) disposé entre les interconnecteurs (4, 5) sans être serré entre eux, le joint (6) étant situé entre la cellule et le limiteur d'écoulement.

## Patentansprüche

1. Verfahren zum Herstellen einer Dichtung zum Anordnen zwischen zwei Auflageflächen, umfassend die folgenden Schritte:
- Vorbereiten eines Kerns (1) aus massiver, durchgehender Keramik, umfassend zwei gegenüberliegende Flächen;
- Anordnen von Bändern (12, 13) aus Glas oder Glaskeramik in einem pastösen Zustand an den Flächen des Kerns;
- Erwärmen des Kerns und der Bänder, um ein Verdampfen von Bindemitteln hervorzurufen, welche in den Bändern enthalten sind, und die Bänder zu verfestigen;
- wobei die Bänder während des Anordnens und des Erwärmens in einem physisch freien Zustand verbleiben.

2. Verfahren zum Herstellen einer Dichtung nach Anspruch 1, **dadurch gekennzeichnet, dass** die Bänder mit einem bauchigen Querschnitt auf den zentralen Abschnitten der Breite der Flächen des Kerns angeordnet werden und nachdem sie verfestigt worden sind einen bauchigen Querschnitt mit einer ausreichenden Höhe beibehalten, um die Kompression der Zelle zwischen den Interkonnektoren nur später in dem thermischen Übergang zu gestatten.

3. Verfahren zur Verwendung einer Dichtung, welche durch ein Verfahren nach Anspruch 1 oder 2 erhalten wird, zum Herstellen einer elektrochemischen Zellenanordnung (7), welche zwischen Interkonnektoren (4, 5) angeordnet ist, umfassend die folgenden Schritte:
- Platzieren der Dichtung (6) zwischen den Interkonnektoren nahe der Zelle;
- Erwärmen der Anordnung umfassend die Zelle, die Dichtung und die Interkonnektoren über eine Glas-Übergangstemperatur der Bänder;
- Komprimieren der Dichtung zwischen den Interkonnektoren um die Interkonnektoren anzunähern, indem die Dichtung zum Fließen gebracht wird.

4. Verfahren nach Anspruch 3, **dadurch gekennzeichnet, dass** es eine Phase einer Erwärmung über eine Entglasungstemperatur der Bänder umfasst, wobei die Bänder aus Glaskeramik bestehen.

5. Verfahren zum Herstellen einer elektrochemischen Zellenanordnung, umfassend zwei Interkonnektoren (4, 5), eine zwischen den Interkonnektoren eingeklemmte Zelle (7) und eine Dichtung (6), welche sich zwischen den Interkonnektoren in der Nähe der Zelle erstreckt, wobei die Dichtung aus einem massiven, durchgehenden Keramik-Kern gebildet ist und zwei gegenüberliegende parallele Flächen an Flächen gegenüber den Interkonnektoren umfasst,
**dadurch gekennzeichnet, dass** die Dichtung nach einem der Ansprüche 3 oder 4 hergestellt ist, indem die Bänder komprimiert werden, um eine Umhüllung aus Glas oder Glaskeramik zu erzeugen, welche den Kern umgibt und sich insbesondere in zwei Schichten (2, 3) zwischen den Flächen des Kerns und den Flächen gegenüber den Interkonnektoren erstreckt.

6. Verfahren nach Anspruch 5, **dadurch gekennzeichnet, dass** die Schichten eine Dicke von höchstens 80 µm aufweisen, wobei die Umhüllung aus Glas besteht.

7. Verfahren nach Anspruch 5, **dadurch gekennzeichnet, dass** die Schichten eine Dicke von höchstens 150 µm aufweisen, wobei die Umhüllung aus Glaskeramik besteht.

8. Verfahren nach einem der Ansprüche 5 bis 7, **dadurch gekennzeichnet, dass** es einen Strömungsbegrenzer (8) umfasst, welcher zwischen den Interkonnektoren (4, 5) angeordnet ist, ohne zwischen ihnen eingeklemmt zu sein, wobei die Dichtung (6) zwischen der Zelle und dem Strömungsbegrenzer angeordnet ist.

## Claims

1. Manufacting process of a seal to be inserted between two bearing surfaces, comprising the following steps:
- preparation of a solid continuous ceramics core, comprising two opposite faces;
- deposition of glass or vitroceramic cords (12, 13) at a pasty state on said core faces;
- heating of the core and of the cords for producing an evaporation of binders present in the cords, and solidificating said cords ;
- the cords remaining at a physically free state during the deposition and the heating.

2. Manufacturing process of a seal according to claim 1, **characterised in that** the cords are deposited with a cambered cross-section on central widthwise portions of the faces of the core and keep a cambered cross-section after having been solidificated, having a sufficient height for transmitting the cell compression between the interconnections only late in the thermal transient.

3. Use process of a seal obtained by a process according to claim 1 or 2 for manufacturing an electrochemical cell assembly located between interconnectors (4, 5), comprising the following steps:
- locating the seal (6) between the interconnectors aside the cell ;
- heating of the assembly comprising the cell, the seal and the interconnectors above a glass transition temperature of the cords ;
- compression of the seal between the interconnectors for drawing up the interconnectors together by letting the seal flow.

4. Process according to claim 3, **characterised in that** it comprises a heat level above a devitrification temperature of the cords, the cords being in vitroceramic.

5. Manufacturing process of an assembly comprising an electrochemical cell, comprising two interconnectors (4, 5), a cell (7) compressed between the interconnectors and a seal (6) extending between the interconnectors aside the cell, the seal being composed of a solid, continuous ceramic central core comprising two opposite faces which are parallel to opposite faces of the interconnectors, **characterised in that** the seal is manufactured according to any one of claim 3 or 4, by compressing the cords to make a glass or vitroceramic coating therefrom, surrounding the core and extending, especially, in two layers (2, 3) between said faces of the core and said opposite faces of the interconnectors.

6. Process according to claim 5, **characterised in that** said layers have a thickness of no more than 80 µm, the coating being in glass.

7. Process according to claim 5, **characterised in that** said layers have a thickness of no more than 150 µm, the coating being in vitroceramic.

8. Process according to any one of claims 5 to 7, **characterised in that** it comprises a flow limiter (8) located between the interconnectors without being compressed therebetween, the seal (6) being disposed between the cell and the flow limiter.
